Europäisches Patentamt

European Patent Office

Office européen des brevets

(19)

(11) EP 1 095 980 A1

(12) **EUROPEAN PATENT APPLICATION**

(43) Date of publication:
02.05.2001 Bulletin 2001/18

(51) Int Cl.$^7$: **C08L 27/06**, C08L 23/28, C08L 23/04, C08L 9/02

(21) Application number: 00122144.9

(22) Date of filing: 12.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 28.10.1999 KR 9947008

(71) Applicants:
• **Dongbang Industrial Co., Ltd.**
  **Damyang-gun, Jeonranamdo (KR)**
• **Jo, Byung-Wook**
  **Seo-Gu, Kwangju-City (KR)**
• **Moon, Sung-Cheal**
  **Buk-Gu, Kwangju-City (KR)**

(72) Inventors:
• **Jo,Byung-Wook**
  **Seo-Gu, Kwangju-City (KR)**
• **Moon, Sung-Cheal**
  **Buk-Gu, Kwangju-City (KR)**
• **Choi, Jae-Gon**
  **Buk-Gu, Kwang-Ju (KR)**
• **Park, Dong-Ju**
  **Damyang-Gun (KR)**

(74) Representative: **Kern, Ralf M., Dipl.-Ing.**
  **Postfach 14 03 29**
  **80453 München (DE)**

(54) **Flame-retardant polyolefin/PVC foam composition and method for producing the same**

(57) The present invention relates to flame-retardant polyolefin based foam composition and a process for preparing it, more particularly, to a composition comprising blends of PVC, nitrile rubber and chlorinated polyethylene or polyethylene which are rendered with a mixture of $Al(OH)_3$, $Mg(OH)_2$, $Sb_2O_3$ and, optionally, magnesium silicate and/or chlorinated paraffin, and which further comprises foaming agent vulcanizing agent plasticizer and stabilizer, so that the proposed composition has improved flame-retardancy and mechanical properties to render environmental advantage, stability and flame-retardant efficiency when it is used for a wide application such as various building materials and automobile parts, sports products and other industrial products.

FIG 4

시료11

시료12

시료13

EP 1 095 980 A1

**Description**

**BACKGROUND OF THE INVENTION**

1. Field of the Invention

The present invention relates to a flame-retardant polyolefin based foam composition and method for producing the same, more particularly, to a composition comprising blends of polyolcfin based and rubber based resins to provide essential flame-retardant property and including additives such as inorganic and chlorine based flame-retarding agents, foaming agent, vulcarnizing agent and others, so that the proposed composition has improved flame-retardant and mechanical properties to provide environmental advantage, stability amd flame-retardant efficiency when used for a wide application such as various building materials and automobile pans, sports goods and other industrial products and process for prcparing the above foam composition.

2. Description of the Prior Art

Conventional foam products are formed and/or molded compositions which have been used in a wide applications such as construction and building materials, automobile, sports goods and others. Recently, although it trends to require more increased and/or improved flame-retardant advantage of foam compositions due to various restrictions and/or government provisions in domestic field and abroad, existing products tend towards their applications to be decreased since they are generally less efficient for flame-retardant function and are considerably harmful to human body.

As examples of conventionally known foam products having flame-retardant properties, V-O grade or BS 476 class "0" foam products in accordance with ASTM-D-2863 comprising the resin blend of only nitrite rubber(NBR) and polyvinyl chloride(PVC) and the flame-retarding agent and other additives have been disclosed in U.S. Patent No. 5,187,203 (Ronald S. Lenox, Lancaster, Pa.: Kim S. Boyd, Quincy, Mass.: William S. Vought, Jr., Landisville, Pa, Feb. 16, 1993), U.S. Patent No. 4,245,055 (Waync E. Smith, Washington Boro, Pa, Jan. 13, 1981) and U.S. Patent No. 3,993,607 (David M. Florence, Lancaster, Pa, Nov.23, 1976) which arc incorporated herein by reference thereto.

An representative example of such known compositions comprises 15-85 parts by weight or 1-200 parts by weight of polyvinyl chloride, 10-100 parts by weight of plasticizer, 100 parts by weight of flame-retarding agent (5-75 parts by weight ferrite)/10-85 parts by weight of lubricant, 0.1-10 parts by weight of stabilizer, 10-20 parts by weight of foaming agent, 2.5 part by weight of sulfur, 5 parts by weight of zince oxide(ZnO), 2.1 parts by weight of stearic acid, 0.8 parts by weight of benzothial disulfidcs(MBTS) and 0.4 parts by weight of tetramethylthinram monosulfide(Monex) based 100 parts by weight nitrile rubber, although composition ratios may be slightly varied according to their specification.

**SUMMARY OF INVENTION**

As mentioned above, existing polyolcfin foam compositions represent generally poor physical and/or mechanical properties, in particular, less environmental advantage to cause the need of more improvement, in spite of having more or less flame-retardant efficiency.

Accordingly, the primary object of the present invention is to provide a new and improved foam composition having superior flame-retardant, mechanical and physical properties and further having good environmental advantage, relative to conventional compositions, comprising nitrile rubber and polyvinyl chloride in the same manner as known prior arts, wherein it comprises a new blend of chlorinated polyethylene(CPE) or polyethylene(PE), and a series of composition ratios of components contained in said composition including flame-retarding agent and other additives are newly defined and combined in order to solve the above problems in known foam compositions.

**BRIEF DESCRIPTION OF THE DRAWINGS**

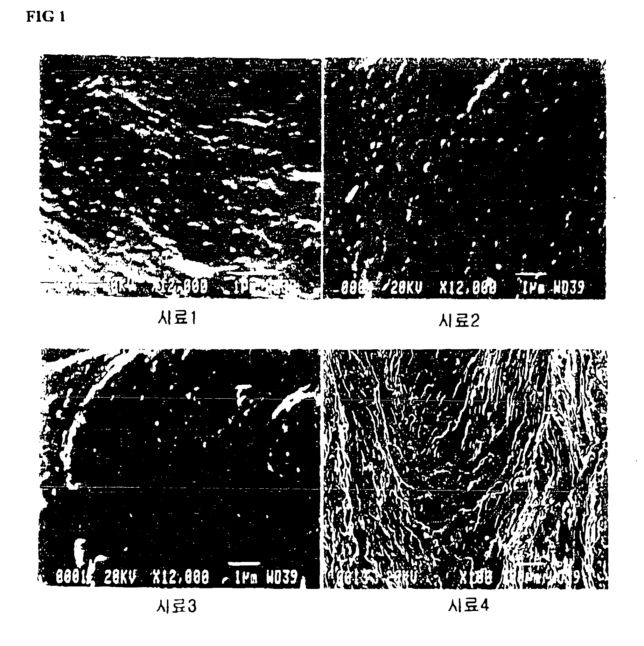

Figure 1 is an electron micrograph(SEM) illustrating foam compositions (samples 1, 2, 3, 4) prepared in example 1 of the present invention;

Figure 2 is another electron micrograph(SEM) illustrating foam compositions (samples 5, 6, 7) prepared in example 2 of the present invention;

Figure 3 is another electron micrograph(SEM) illustrating foam compositions (samples 8, 9, 10) prepared in example 2 of the present invention;

Figure 4 is another electron micrograph(SEM) illustrating foam compositions (samples 11, 12, 13) prepared in example 2 of the present invention;

Figure 5 is an electron micrograph(SEM) illustrating cell-structure (A) and dispersion extent of additives(B) contained in conventional foam product;

Figure 6a is another electron micrograph(SEM) illustrating cell-structure (A) and dispersion extent of additives(B) contained in sample 1 prepared by example 5 of the present invention;

Figure 6b is another electron micrograph(SEM) illustrating cell-structure (A) and dispersion extent of additives(B) contained in sample 4 prepared by example 5 of the present invention; and

Figure 6c is another electron micrograph(SEM) illustrating cell-structure (A) and dispersion extent of additives(B) contained in sample 5 prepared by example 5 of the present invention.

## DETAILED DESCRIPTION OF INVENTION

In accordance with the present invention, a flame-retardant composition comprises nitrile rubber and polyvinyl chloride as resin components and also includes additives such as flame-retarding agent, plasticizer and stabilizer, which is characterized by said resin components consisting of 10-50 wt.% of nitrilc rubber, 30-50 wt.% of polyvinyl chloride, and 20-40 wt.% of chlorinated polyethylene or polyethylene, said flame-retarding agent consisting of 5-20 wt.% of $Al(OH)_3$, 0-5 wt.% of magnesium silicate, 40-80 wt.% of $Mg(OH)_2$, 5-10 wt.% of $Sb_2O_3$, and 0-10 wt.% of chlorinated paraffin, wherein the content of said flame-retarding agent is in the range of 0.55-1 wt.% based on 1 part by weight of said resin component, and further contains conventional additives.

Such foam composition is prepared by the steps of admixing 0.50 wt.% of plasticizer, 0-15 wt.% of stabilizer and 10-40 wt.% of foaming agent together with said blend consisting of resin and flame-retarding agent at 114-120°C, adding 0-2.5 wt.% of vulcanizing agent and 0-1 wt.% of vulcanization promoter into said mixture, followed by extruding and/or injecting the resultant material to produce foam composition.

For more specific illustration of the present invention, an embodiment of the present composition is prepared as follows; resin components comprise 10-50 wt.% of nitrile rubber and 30-50 wt.% of polyvinyl chloride, and 20-40 wt.% of chlorinated polyethylene or polyethylene, flame-retarding agent comprises 5-20 wt.% of $Al(OH)_3$, 0-5 wt.% of magnesium silicate, 40-80 wt.% of $Mg(OH)_2$, 5-10 wt.% of $Sb_2O_3$, and 0-10 wt.% of chlorinated paraffin wherein the content of said flame-retarding agent is in the range of 0.55-1 wt.% based on 1 part by weight of said resin component, and further contains 0-50 wt.% of plasticizer, 0-15 wt.% of stabilizer, 0-2.5 wt.% of vulcanizing agent, 0-1 wt.% of each of 2-mercapto benzothiazol(M), dibenzothiadyl disulfide(DM) and Zn-dimethyl dithiocarbamate(PZ) as vulcanization promoters, 10-40 wt.% of foaming agent, 0-2 wt.% of auxiliary (foaming) agent, 0-5 wt.% of heat transfer 0-2.5 wt.% of external morphological modifier, 0-4 wt.% of internal morphological modifier, 0-10 wt.% of filler.

Resin composition according to the present invention comprises nitrile rubber, polyvinly chloride and chlorinated polyethylene or polyethylene, in particular, said chlorinated polyethylene being polyethylene based resin substituted by chlorine effective to delay ignition and combustion behaviors instead of some of hydrogen atoms contained in polyethylene and having essential flame-retardant property which is characterized by the increased combustion-resistance dependent on the increase of content of chlorine, better impact-resistant, ozone-resistant, weather-proof and age-resistant properties and good compatibility with polyvinyl chloride used. In this regard, the present invention provides more improved flame-retardant efficiency relative to known prior art to foam compositions prepared by blending nitrile rubber with polyvinyl chloride and chlorinated polyethylene having essential flame-retardant properties, in addition to, by adding inorganic and chlorinated based flame-retarding agents to accomplish the flame-retardant efficiency about a few times higher than that of prior art. However, the present invention includes above resin components consisting of not only three(3) components, but also two(2) or four(4) components selected from the group consisting of nitrile rubber, polyvinyl chloride, chlorinated polyethylene and polyethylene.

Generally, halogen containing compounds represent flame-retardant efficiency by stabilizing radicals substantially generated in vapor phase according to the deduction for chemical mechanism concerned as follows:

[Chemical formula 1]

$$HO\cdot + HX \rightarrow HOH + X\cdot \text{ (forbidden reaction)}$$

$$X\cdot + RH \rightarrow HX + R\cdot \text{ (regeneration reaction)}$$

$$\text{(termination of chain reaction)}$$

$$XO\cdot + \cdot OH \rightarrow HX + O_2 \text{ (reduce the concentrations of active O}\cdot \text{ and } \cdot OH$$

and terminate chain reaction to obtain flame-retarding effect)

$$X\cdot + O\cdot + M \rightarrow XO\cdot + M\cdot$$

$$X_2 + O\cdot \rightarrow XO\cdot + X\cdot \text{ (generate non-flammable gas at the decomposition}$$

process to obtain $O_2$ blocking effect)

$$O\cdot + \cdot OX \rightarrow O_2 + X\cdot$$

In the above formula 1, activated radicals such as·OH radical generate heat in the process of chemical reaction during combustion and the latent heat generated become a source of energy required to combust inflammable materials around said source.

Flame-retarding agent reduces concentrations of O·and·OH as activated radicals and terminates chain reaction to provide flame-retarding efficiency. C-X bond cleavage occurred during combustion is an endothermic reaction to effect the reduction of combustion heat by inflammable materials, is also believed to prevent the contact of oxygen from said materials by generating non-flammable gas during the decomposition. In this regard, flame-retardant efficiency may be substantially obtained from HX which is transferred into X radical as a source of lower energy by the reaction. Furthermore, halogen containing type flame-retarding agent can represent flame-retardant efficiency even in solid phase and HX effects as an oxidation catalyst for inflammable materials, resulting in the production of carbon compounds called 'char' by forming ring structure of oxidized materials. Such produced carbon compounds block oxygen and latent heat to assist inflammable materials to be remained below(or outside of) the combustion area. (연소영역 이하?...인소영역내/ 외?..')

Flame-retarding agent used in the present invention may be primarily inorganic agent and additionally halogen containing type agent, particularly, chlorine based agent in a small amount.

As the inorganic frame-retarding agent, it may include aluminium hydroxide, antimony oxide, magnesíum hydroxide and boron containing compounds. In contrast to organic flame-retarding agent, there is known the art that inorganic agent is non-volatile by heat and is substantially in the process of endothermic reaction to allow it to be decomposed, resulting in the generation of non-flammable gas such as $H_2O$, $CO_2$, $SO_2$, SCI, etc. In addition to, said agent in vapor phase can dilute flammable gas and cover the surface of plastic product to prevent the access of oxygen from said product. At the same time, it can function to allow plastic product to be cooled and to reduce the amount of water generated during thermal decomposition(or pyrolysis) via the endothermic reaction performed onto the surface of solid phase. For example, aluminium hydroxide and magnesium hydroxide are decomposed by the following reaction mechanism to generate water accompanying large endothermic process to result in flame-retardant efficiency.

[Chemical formula 2]

$$2Al(OH)_3 + heat \rightarrow Al_2O_3 + {}_3H_2O \text{ -298KJ/mol}$$

$$Mg(OH)_2 + heat \rightarrow MgO + H_2O \text{ -328KJ/mol}$$

Alternatively, antimony oxides used are antimony (III) oxide and antimony (V) oxide, either of which is generally used as auxiliary agent to provide synergistic effect to flame-retardant behavior by halogen containing flame-retarding agent rather than its own solely. The reaction mechanism of such synergistic effect may be assumed by the following steps, in which $SbCl_3$ produced in each of reaction steps can function to lower the temperature of plastic product via endothermic reaction and has a role of radical intercepter similar to HCl and HBr. Someone proposed that both of $SbCl_3$ and SbOCl permit halogen emission rate to be reduced within combustion area to provide more extended time to function as radical intercepter, resulting in improved flame-retardant efficiency.

Furthermore, heavy gas produced cover the surface of solid phase to prevent the access of oxygen from said phase in order to provide flame-retardant efficiency.

[Chemical formula 3]

$$Sb_2O_3 \text{ (keeping } \sim 250°C) \rightarrow 2SbOCl + H_2O$$

$$5SCOCl \text{ (keeping } 245 \sim 250°C) \rightarrow Sb_4O_5Cl + SbCl_3$$

$$4Sb_4O_5Cl_2 \text{ (keeping } 410 \sim 250°C) \rightarrow 5Sb_3O_4Cl + SbCl_3 \uparrow$$

$$3Sb_3O_4Cl \text{ (keeping } 475 \sim 565°C) \rightarrow 4Sb_2O_3 + SbCl_3 \uparrow$$

$$Sb_2O_3(S) \text{ (keeping } 685°C) \rightarrow Sb_2O_3 \qquad \text{(I)}$$

Resin used in the present invention is nitrile rubber, preferably nitrile rubber having acrylonitrilc contcnt(AN) of 28-35% as primary resin and, in case of using polyvinyl chloride(PVC) and chlorinated polyethylene having essential flame-retardant property, it is preferable to blend them with the chlorinated polyethylene having chlorine content of 36-42% in order to provide essential flame-retardant property of combined resin.

In consideration of the protection of environment and the influence against workability of product, the present invention excludes halogen containing flame-retarding agent in order to produce environmentally advantageous composition, but preferably and essentially uses $Al(OH)_3$, $Mg(OH)_2$, $Sb_2O_3$ as inorganic agents and chlorinated paraffin as chlorine based agent in a small amount in connection with environmental aspect and the improvement of flame-retardant efficiency. The flame-retarding agent which is effectively usable in the present invention includes all of the above five specific components or one or two suitably selected from them.

Foaming agent used in this invention comprises preferably azodicarbon amides (for example, marketed under trademark 700MC, 5000F, 3000F, ADCA) which are azo-based compounds and, in order to control foaming property and temperature to effect workability and productivity, auxiliary (foaming) agent such as urine-based auxiliary agent (trademark "Cellex-A") and heat transfer promoter such as ZnO may be efficiently added to the invented composition.

Vulcanizing agent which is usable in the present invention may be sulfur. Vulcanization promoters which are usable in this invention may be selected on the basis of vulcanization enhancing effect, scorching property, age-resisting property, activation temperature, dispersion, pollution level, etc. and preferably include 2-mercapto benzothiazol(M) having relatively higher scorching rate and di-benzothiadyl disulfide(DM) having lower scorching rate among thiazols, and Zn-dimethyl dithiocarbamate(PZ) having higher scorching rate and vulcanizing rate among dithioic acid salts.

Examples of stabilizer used in this invention may be selected on the basis of foaming rate and influence against uniformity of cell size and include Ba-Zn based stabilizers, particularly, commercial products marketed in the trademarks "BZ-806F" and "BZ-119".

The present invention use preferably plasticizer such as diethylhexylphtalate(DOP) for the compatibility with resin, workability and foaming property, age-resister such as 2,2,4-trimethyl-1,2-dihydroquinon (Kumanox RD) on account for the effect to vulcanization process, internal morphological modifier such as polyethylene wax(LC-102N) to enhance the workability of rubber, external morphological modifier such as stearic acid for extrusion property, and carbon black(N550FEF) as filler to provide colour, prevent photo-oxidation, obtain reinforcement efficiency and reduce cost of production.

For more specific illustration of the present invention, the following examples are presented which are intended to be merely illustrative of and not in any way to be limiting. Percent(%) to indicate content of composition as described in the present examples is % by weight, if there is no otherwise mentioned.

Among the abbreviations of components defined in examples, NBR is nitrile rubber, PVC is polyvinyl chloride, PE is polyethylene, CPE is chlorinated polyethylene and DOP is diethylhexyl phtalate.

[EXAMPLE]

EXAMPLE 1

[Preparation of NBR/PVC, PE blend products]

Thermal and dynamic behavior dependent on composition ratio of NBR/PVC, PE blend, temperature and/or time are observed and discussed in association with morphology on interfaces between phases.

Composition ratios of resins such as samples 1, 2, 3 and 4 listed below in Table 1, were defined as 5/5, 3/7, 7/3 wt.% in terms of NBR/PVC ratio and 5/5 wt.% in terms of NBR/PE. Blending process was performed by using Rheomixer(HAAKE) at 120°C, 50rpm and period of 40 minutes. Variations of melting point, torque value and blending state were observed every 10 minutes and discussed in association with said morphology. In order to observe and investigate said morphology, specimens having size of 1cm(length) x 2.5cm(width) x 0.3cm(height) were prepared by using Mini-max Molder (Csi-183MMV) at 85°C, Rs 0 for 5 minutes. With SEM (JEOL JSM-840A) broken side was observed for the investigation of morphology.

The result proved that, for NBR/PVC blends, sizes of PVC particles were reduced with the lapse of time, particularly, it was understood that said blends were homogeneous since PVC particles having about 0.1-0.2 of particle diameter to be dispersed after 30 minutes, and had the increased melting points up to 140°C. For NBR/PE blends, good blending state with increased melting points up to 125°C could be observed.

The composition ratio of blends are shown below in Table 1 and attached Figure I (samples 1, 2, 3 and 4).

[Table I]

|  | resin composition(wt. %) |
|---|---|
|  | NBR/PVC/CPE/PE |
| 1 | 5/5/0/0 |
| 2 | 3/7/0/0 |
| 3 | 7/3/0/0 |
| 4 | 5/0/0/5 |
| 5 | 1/0.8/0.2/0 |
| 6 | 1/0.8/0.4/0 |
| 7 | 1/0.8/0.6/0 |
| 8 | 1/0.6/0.2/0 |
| 9 | 1/0.6/0.4/0 |
| 10 | 1/0.6/0.6/0 |

EXAMPLE 2

[Preparation of NBR/PVC/CPE blend products]

Similarly, thermal and dynamic behavior dependent on composition ratio of NBR/PVC/CPE blend, temperature and/or time are observed and discussed in association with morphology on interfaces between phases.

Blending process, specimen preparation and morphology determination were performed by following the procedure of Example 1, excepting composition ratios of resins such as samples 7-12 listed above in Table 1 were defined as 1/1, 0.8, 0.6/0.2-0.6 wt.% in terms of NBR/PVC/CPE ratios.

The result proved that NBR/PVC/CPE blends having 1/1, 0.8, 0.6 wt.% demonstrated remarkable changes of compatibility with each other depending on CPE content, particularly, had the property of homogeneous state in the range of 10-30 wt.% of CPE.

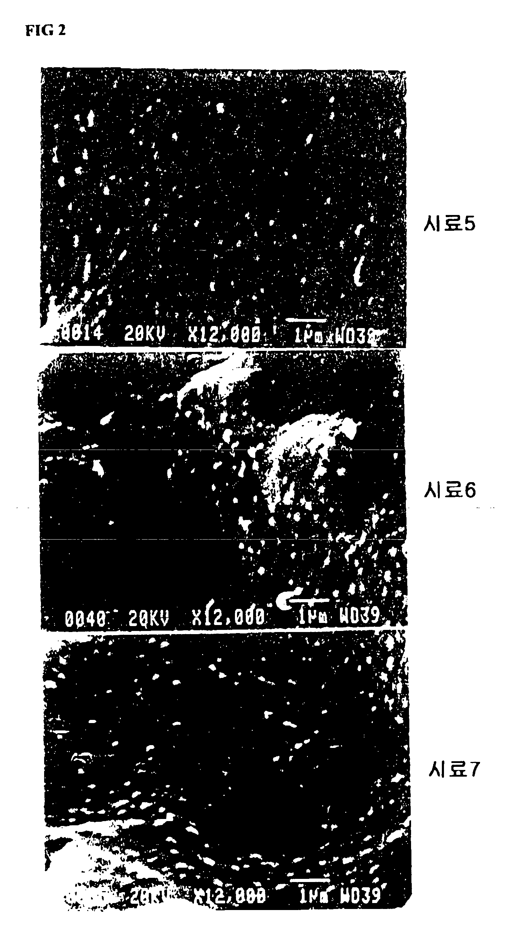

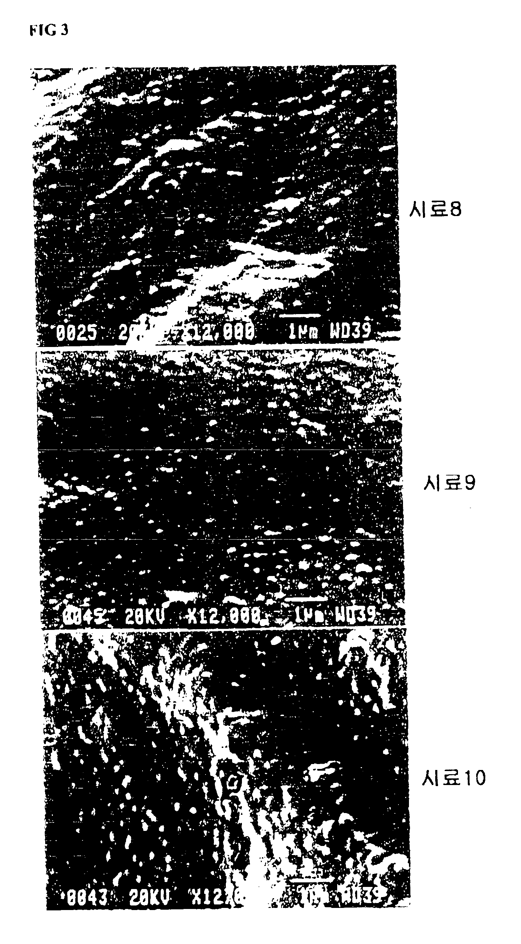

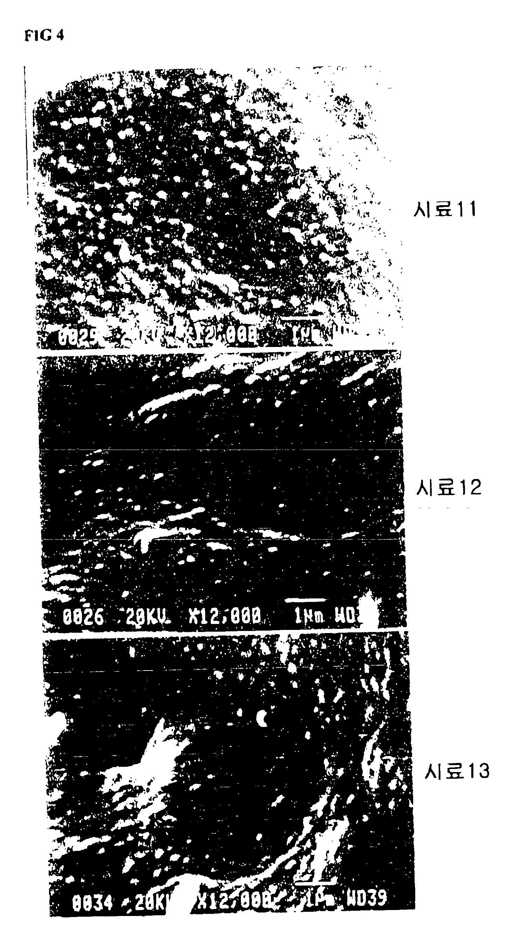

The results and the composition ratio of blends are shown above in Table 1 and attached Figure 2(samples 5, 6 and 7), Figure 3(samples 8, 9 and 10) and Figure 4(samples 11, 12 and 13).

[Table 2]

| component | sample No. | 1 | 2 | 3 | 4 | 5 |
|---|---|---|---|---|---|---|
| resin | NBR | 50 | 50 | 50 | 50 | 50 |
| | PVC | 30 | 30 | 30 | 30 | 30 |
| | CPE | 20 | 20 | 20 | 20 | 20 |
| flame retarding agent | Al(OH)$_3$ | 10 | 5 | 5 | 20 | 10 |
| | magnesium silicate | | 5 | 5 | | |
| | Mg(OH)$_2$ | 40 | 50 | 50 | 60 | 70 |
| | Sb$_2$O$_3$ | 5 | 10 | 10 | 10 | 10 |
| | chlorinated paraffin | | 10 | 10 | 10 | 10 |
| external morphological modifier | stearic acid | 1 | 1 | 1 | 1.5 | 1 |
| internal morphological modifier | PE wax | 4 | 4 | 4 | 4 | 4 |
| PVC stabilizer | Ba-Zn based | 15 | 15 | 15 | 15 | 15 |
| plasticizer | DOP | 20 | 20 | 30 | 30 | 35 |
| age resister | 2,2,4-trimethyl dihydroquinolin | 2.5 | 2.5 | 2.5 | 2.5 | 2.5 |
| vulcanizing agent | Sulfur | 1.25 | 2.5 | 2.5 | 2.5 | 2.5 |
| vulcanization promoter | DM | 0.5 | 1 | 1 | 1 | 1 |
| | PZ | 0.5 | 1 | 1 | 1 | 1 |
| | M | 0.5 | 1 | 1 | 1 | 1 |
| foaming agent | azodicarbon amide (Cellcom-AC based) | 18 | 27 | 18 | 27 | 22.5 |
| auxiliary foaming agent | urine based (Celex) | 1.5 | 1.5 | 1.5 | 1.5 | 1.5 |
| heat transfer promoter | ZnO | 5 | 4 | 4 | 4 | 4 |

[Table 2 (continued)]

| component | sample No. | 6 | 7 | 8 | 9 | 10 |
|---|---|---|---|---|---|---|
| resin | NBR | 46 | 42 | 38 | 38 | 38 |
| | PVC | 27 | 33 | 31 | 31 | 31 |
| | CPE | 27 | 25 | 31 | 31 | 31 |
| flame retarding agent | Al(OH)$_3$ | 9 | 8 | 8 | 8 | 8 |
| | magnesium silicate | | | | | |
| | Mg(OH)$_2$ | 64 | 67 | 46 | 54 | 54 |
| | Sb$_2$O$_3$ | 9 | 8 | 8 | 8 | 8 |
| | chlorinated paraffin | 9 | 8 | 8 | 8 | 8 |
| external morphological modifier | stearic acid | 0.9 | 0.8 | 1.2 | 1.2 | 0.8 |
| internal morphological modifier | PE wax | 3.3 | 3.3 | 3.1 | 3.1 | 3.1 |
| PVC stabilizer | Ba-Zn based | 14 | 13 | 12 | 12 | 12 |
| plasticizer | DOP | 36 | 33 | 23 | 23 | 31 |
| age resister | 2,2,4-trimethyl dihydroquinolin | 2.3 | 2.1 | 1.9 | 1.9 | 1.9 |
| vulcanizing agent | Sulfur | 2.3 | 2.1 | 1.9 | 1.9 | 1.9 |
| vulcanization promoter | DM | 0.9 | 0.8 | 0.8 | 0.8 | 0.8 |
| | PZ | 0.9 | 0.8 | 0.8 | 0.8 | 0.87 |
| | M | 0.9 | 0.8 | 0.8 | 0.8 | 0.8 |
| foaming agent | azodicarbon amide (Cellcom-AC based) | 18 | 18 | 27 | 18 | 18 |
| auxiliary foaming agent | urine based (Celex) | 1.4 | 1.3 | 1.2 | 1.2 | 1.2 |
| heat transfer promoter | ZnO | 3.6 | 3.3 | 3.1 | 3.1 | 3.1 |

[Table 2 (continued)]

| component | sample No. | 11 | 12 | 13 |
|---|---|---|---|---|
| resin | NBR | 38 | 36 | 36 |
| | PVC | 31 | 36 | 36 |
| | CPE | 31 | 28 | 28 |
| flame retarding agent | Al(OH)$_3$ | 8 | 7 | 7 |
| | magnesium silicate | | | |
| | Mg(OH)$_2$ | 62 | 43 | 50 |
| | Sb$_2$O$_3$ | 8 | 7 | 7 |
| | chlorinated paraffin | 8 | 7 | 7 |
| external morphological modifier | stearic acid | 0.38 | 1.1 | 0.7 |
| internal morphological modifier | PE wax | 3.1 | 2.9 | 2.9 |
| PVC stabilizer | Ba-Zn based | 12 | 11 | 11 |
| plasticizer | DOP | 39 | 29 | 36 |
| age resister | 2,2,4-trimethyl dihydroquinolin | 1.9 | 1.8 | 1.8 |
| vulcanizing agent | Sulfur | 1.9 | 1.8 | 1.8 |
| vulcanization promoter | DM | 0.8 | 0.7 | 0.7 |
| | PZ | 0.8 | 0.7 | 0.7 |
| | M | 0.8 | 0.7 | 0.7 |
| foaming agent | azodicarbon amide (Cellcom-AC based) | 18 | 27 | 18 |
| auxiliary foaming agent | urine based (Celex) | 1.2 | 1.1 | 1.1 |
| heat transfer promoter | ZnO | 31 | 2.9 | 2.9 |

[Table 2 (continued)]

| component | sample No. | 14 | 15 | 16 | 17 | 18 |
|---|---|---|---|---|---|---|
| resin | NBR | 50 | 50 | 50 | 50 | 50 |
| | PVC | 30 | 30 | 30 | 30 | 30 |
| | CPE | 20 | 20 | 20 | 20 | 20 |
| flame retarding agent | Al(OH)$_3$ | 20 | 20 | 20 | 20 | 20 |
| | magnesium silicate | | | | | |
| | Mg(OH)$_2$ | 60 | 60 | 60 | 60 | 60 |
| | Sb$_2$O$_3$ | 10 | 10 | 10 | 10 | 10 |
| | chlorinated paraffin | 10 | 10 | 10 | 10 | 10 |
| external morphological modifier | stearic acid | 10 | 10 | 10 | 10 | 10 |
| internal morphological modifier | PE wax | 2.5 | 2.5 | 2.5 | 2.5 | 2.5 |
| PVC stabilizer | Ba-Zn based | 4 | 4 | 4 | 4 | 4 |
| plasticizer | DOP | 35 | 35 | 35 | 35 | 35 |
| Age resister | 2,2,4-trimethyl dihydroquinolin | 2.5 | 2.5 | 2.5 | 2.5 | 2.5 |
| filler + pigment | Carbon-black (N550FEF) | 5 | 2.5 | 5 | 5 | 2.5 |
| vulcanizing agent | Sulfur | 2.5 | 2.5 | 2.5 | 2.5 | 2.5 |
| vulcanization promoter | DM | 1 | 1 | 14 | 1 | 1 |
| | PZ | 1 | 1 | 1 | 1 | 1 |
| | M | 1 | 1 | 1 | 1 | 1 |
| foaming agent | azodicarbon amide (Cellcom-AC based) | 22.5 | 22.5 | 22.5 | 22.5 | 22.5 |
| auxiliary foaming agent | urine based (Celex) | 1.5 | 1.5 | 1.5 | 1.5 | 1.5 |
| heat transfer promoter | ZnO | 45 | 4 | 4 | 4 | 4 |

EXAMPLE 3

Blends were prepared by following the same composition ratio described in Example I like as shown above in Table 2, by using Rheomixer(HAAKE) without the addition of vulcanizing agent and/or vulcanization promoter at the condition of temperature of 120°C, RPM 50 for 10 minutes. In this regard, blends were subjected to the extrusion step by means of Mini-max molder(Csi-183MMV) at 80°C, Rs 5 for 5minutes and vulcanization step by means of Hot-Press (Carver) under heat and pressure at 130°C for 10 minutes. Alternatively, foaming processes used in the present invention were generally performed by either of two ways, one of which is to increase the temperature from 130°C up to 250°C under heat and pressure(Carver) and the other one being to keep the temperature at 230°C for 2-3 minutes. Further, foaming ability was test and determined by observing surface status, foaming rate, cell structure, etc. after foaming process, and LOI(Atlas) test as a method for determining flame-retardant efficiency in accordance with ASTM-D-2863 wherein specimen is prepared to have the size of width 6.5+/-0.5mm, thick 2.0+/-0.25mm and length 7.0-150mm, oxygen index was determined by optionally adjusting the feed amount of oxygen and nitrogen and morphology were determined by using SEM(JEOL JSM-840A) to observe broken side of specimen.

The result shows that foaming process is generally occurred within the ranges of 130-170°C requiring about 5 minutes and 40 seconds, foam product has smooth surface with uniformly formed cell-structure and 91.4% (equal to about twice of무엇의 2배?) in the direction of radius.

In LOI test, oxygen index was 31.3 slightly less than 34.5 in case of a commercial product (manufactured by Armstrong Co.). The results of physical properties measured for samples 1-18 are listed below in Table 3.

EXAMPLE 4

Samples 2 and 3 described in Example 1 were prepared with the same composition as in Table 2. With a view to foaming ability, contents of foaming agent, auxiliary agent and plasticizer were appropriately controlled in connection with the combination and working conditions found out by the above said examples. The composition ratio and other key processing parameters are set forth in Table 3. Particularly, blending, extrusion and vulcanization (가류?=가황) and foaming processes and determinations of foaming ability, flame-retardant efficiency and morphology were performed in the same way for sample 1.

The results demonstrated the variation of contents of foaming agent and auxiliary agent and plasticizer to effect foaming ability and flame-retardant efficiency for samples 2 and 3, for example, it was shown in case of sample 2 that foaming reaction was occurred within the ranges of 177-182°C and the sample had uniform cell-structure while less improved surface state. On the contrary, in case of sample 3 having comparably higher content of plasticizer, foaming reaction was occurred within the ranges of 177-195°C and the sample had uniform cell-structure simultaneously with more improved surface state. Meanwhile, the result of LOI test demonstrates that oxygen index of sample 2 was 31.1 higher than 28.3 of sample 3 and allows this result to be caused by difference of plasticizer contents between samples 2 and 3. Accordingly, preferable combination and working conditions were found out in order to provide 2.5-3.5 times of foaming ability and 28.3 and 31.1 of oxygen indexes.

EXAMPLE 5

Based on the result of the above experiments for samples 4-18 described in Examples 1 and 2, this example was aimed at flame-retardant efficiency and foaming ability, particularly, increased oxygen index and foaming extent in order to test flame-retardant efficiency and foaming ability, respectively. The composition and other related parameters such as resin composition ratio, specific flame-retarding agent and foaming agents and contents thereof are shown in Table 3 below and preferably controlled. Blending process was performed by firstly using Rheomixer(HAAKE) without the vulcanizing agent and vulcanization promoter at 114-118°C (provided that it has the melting point equal to or less than 125°C), RPM 50 and period of 40 minutes, then, following the foaming process with the addition of the vulcanizing agent and vulcanization promoter at 62-67°C (provided that it has the melting point equal to or less than 80°C), RPM 50 and period of 10 minutes. In this regard, blends were subjected to the extrusion step by means of Minimax molder(Csi-183MMV) at 70-100°C, Rs 5 for 2-5minutes. Vulcanization and foaming processes used in the present invention were generally performed by either of two ways, one of which is to increase the temperature from 130°C up to 250°C under heat and pressure(Carver) and the other one being to keep the temperature at 230°C for 2-3 minutes. Further, foaming ability, flame-retardant efficiency and morphology were tested and determined in the same ways as mentioned above.

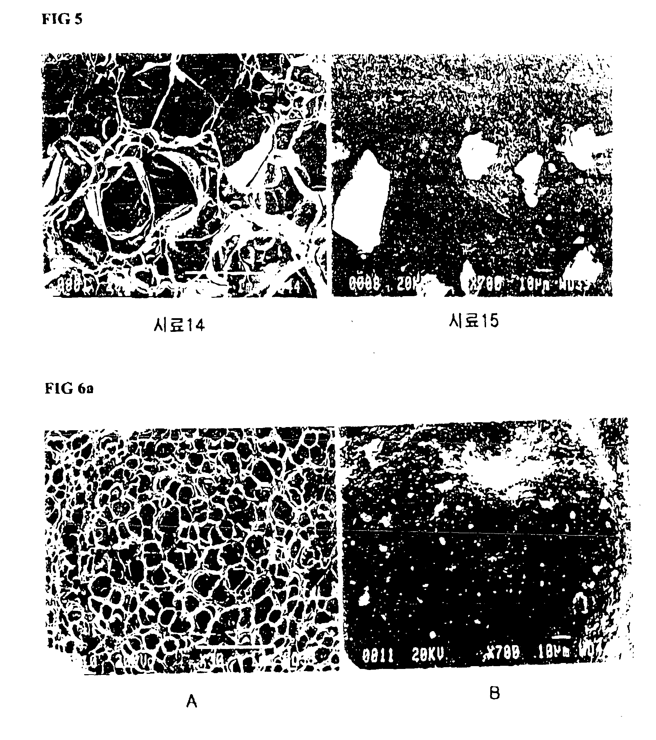

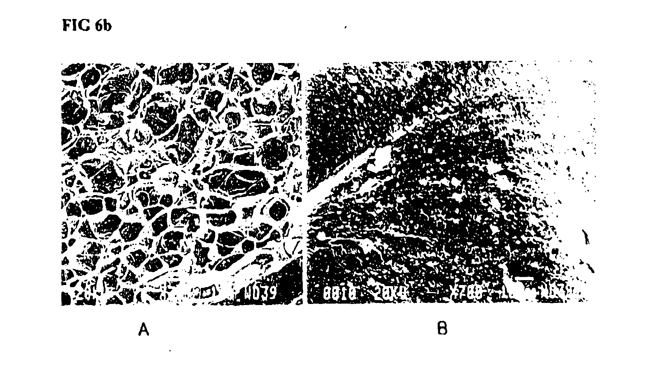

As the result, most of samples 4-13 demonstrated superior surface and cell structure except samples 2 and 9 having surface less improved due to excessive foaming reaction, and proved to have 2.0-3.5 times of foaming ability. In regard to oxygen index in accordance with ASTM-D-2863, while samples 1, 2, 3 and 9 had 31.5, 31.1, 28.3 and 31.6, respectively, the others demonstrated about 35.2-41.8 higher than 34.5 in case of commercial product (manufactured by Armstrong Co.) to result in non-flammable foam products having more enhanced flame-retardant efficiency. Accordingly, blending process was performed under the composition ratios of resin NBR/PVC/CPE=10-50/30-50/20-40 wt.%, flame-retarding agent $Al(OH)_3$/ magnesium silicate/$Mg(OH)_2$/$Sb_2O$/chlorinated paraffin=5-20/0-5/40-80/5-10/0-10 wt.%, resin/flame-retarding agent=1/0/55-1 wt.%, and the contents of plasticizcr/foaming agent(DOP/Cellcom-AC based) ranging of 0-50/10-40 wt.% in connection with the combination condition realized by experimental performances. In regard to working condition, blending process was also performed by firstly using Rheomixer(HAAKE) without the vulcanizing agent and vulcanization promoter at 114-120°C (provided that it has the melting point equal to or less than 125°C), RPM 50 and period of 40 minutes, then, following the foaming process with the addition of the vulcanizing agent and vulcanization promoter at 62-70°C (provided that it has the melting point equal to or less than 80°C), RPM 50 and period of 10 minutes. In this regard, blends were subjected to the extrusion step by means of Minimax molder(Csi-183MMV) at 70-100°C, Rs 5 for 2-5minutes. Vulcanization and foaming processes were generally perfomed by increasing the temperature from 120°C up to 230°C or keeping the temperature at 230°C for 2-3 minutes to obtain foam product having improved foaming property and flame-retardant property as mentioned above. The composition of components used in the above examples were listed in Table 2 and the results are set forth in Table 3 and accompanying Figures 5 and 6.

[Table 3]

| sample No. | foaming reaction | | | | | composition | | | | LOI(oxygen index) |
|---|---|---|---|---|---|---|---|---|---|---|
| | foaming method | | foaming ability | foaming property | | composition ratio(wt.%) | | | | |
| | 120→230°C | 230°C | | | | | | | | |
| | foaming temp (time) (°C/min) | time (min) | rate(%) | surface | cell structure | R/F-R | resin N/P/C | flame-retardants | P/B-ADOP/AC based | |
| 1 | 138-175 (9'45") | | 92 | good | uniform | 1/0.55 | 0.5/0.3/ 0.2 | 10/0/40/5/0 | 20/18 | 31.5 |
| 2 | 177-209 (13'11") | 2'20" | 151 | good(Δ) | uniform | 1/0.8 | 0.5/0.3/ 0.2 | 5/5/50/10/1 0 | 20/27 | 31.1 |
| 3 | 177-195 (9'21") | 2'20" | 257 | good | uniform | 1/0.8 | 0.5/0.3/ 0.2 | 5/5/50/10/1 0 | 30/18 | 28.3 |
| 4 | 171-195 (11'26") | 2'20" | 202 | good(Δ) | uniform | 1/1 | 0.5/0.3/ 0.2 | 20/0/60/10/ 10 | 30/27 | 38.8 |
| 5 | 171-195 (11'26") | 2'20" | 163 | good | uniform | 1/1 | 0.5/0.3/ 0.2 | 10/0/70/10/ 10 | 35/22.5 | 35.6 |
| 6 | 171-195 (11'26") | 2'20" | 165 | good | uniform | 1/0.9 | 0.46/0.27 | 9/0/64/9/9 | 36/18 | 36.5 |
| 7 | 171-195 (11'26") | 2'20" | 153 | good | uniform | 1/0.92 | 0.42/0.33 /0.25 | 8/0/46/8/8 | 33/18 | 37.3 |
| 8 | 171-195 (11'26") | 2'20" | 150 | good | uniform | 1/0.7 | 0.38/0.31 | 8/0/54/8/8 | 23/27 | 36.9 /0.31 |
| 9 | 171-195 (11'26") | 2'20" | 310 | good | uniform | 1/0.77 | 0.38/0.31 | 8/0/54/8/8 | 23/18 | 31.6 /0.31 |
| 10 | 171-195 (11'26") | 2'20" | 154 | good | uniform | 1/0.77 | 0.38/0.31 | 8/0/54/8/8 | 31/18 | 36.5 /0.31 |
| 11 | 171-195 (11'26") | 2'20" | 205 | good | uniform | 1/0.85 | 0.38/0.31 | 80/062/8/8 | 39/18 | 35.6 |

[Table 3] (continued)

| sample No. | foaming reaction | | | | | composition | | | | LOI(oxygen index) |
|---|---|---|---|---|---|---|---|---|---|---|
| | foaming method | | foaming ability | foaming property | | composition ratio(wt.%) | | | | |
| | 120→230°C | 230°C | | | | | | | | |
| | foaming temp (time) (°C/ min) | time (min) | rate(%) | surface | cell structure | R/F-R | resin N/P/C | flame-retardants | P/B-ADOP/ AC based | |
| 12 | 171-195 (9'21") | 2'20" | 152 | good | uniform | 1/0.64 | 0.38/0.36 /0.28 | 7/0/43/7/7 | 29/27 | 36.9 |
| 13 | 171-195 (11'26") | 2'20" | 156 | good | uniform | 1/0.7 | 0.38/0.36 /0.28 | 7/0/50/7/7 | 36/18 | 35.2 |
| 14 | 160-189 (11'25") | 2'20" | 95 | good | uniform | 1/1 | 05/0.3/ 02 | 20/0/60/10/ 10 | 35/22.5 | 41.8 |
| 15 | 160-189 (11'25") | 2'20" | 93 | good | uniform | 1/1 | 05/0.3/ 02 | 20/0/60/10/ 10 | 35/22.5 | 38.8 |
| 16 | 160-189 (11'25") | 2'20" | 98 | good | uniform | 1/1 | 05/0.3/ 02 | 20/0/60/10/ 10 | 35/22.5 | 39.8 |
| 17 | 160-189 (11'25") | 2'20" | 92 | good | uniform | 1/1 | 05/0.3/ 02 | 20/0/60/10/ 10 | 35/31.5 | 40.7 |
| 18 | 160-189 (11'25") | 2'20" | 130 | good | uniform | 1/1 | 05/0.3/ 02 | | 45/22.5 | 37.5 |
| * R/F-R : resin/flame-retarding agent, resin(N/P/C): NBR/PVC/CPE. | | | | | | | | | | |

Flame-retarding agent (Al/MS/Mg/Sb/C-P) : Al(OH)$_3$, magnesium silicate, Mg(OH)$_2$, Sb$_2$O$_3$, chlorinated paraffin, P/B-A(DOP/5000F) : plasticizer/foaming agent.

As mentioned above, the present invention relates to flame-retardant foam compositions prepared by blending polyolefin based and rubber based resins, particularly, chlorinated polyethylene to provide essential flame-retardant property and suitably adding and mixing inorganic and chlorine based flame-retarding agent, foaming agent, vulcanizing agent and other additives together with said blends in order to obtain improved flame-retardant property and mechanical property and environmental advantage so that it allows the present foam product to be available for lots of applications such as various building materials and automobile parts, sports goods and other industrial products manufactured by extrusion or injection molding processes.

**Claims**

1. A Flame-retardant foam composition having nitrile rubber and polyvinyl chloride as resin components and including flame-retarding agent, plasticizer and stabilizer as additives, the Flame-retardant foam composition comprising said resin components consisting of 10-50 wt.% of nitrile rubber, 30-50 wt.% of polyvinyl chloride, and 20-40 wt.% of chlorinated polyethylene or polyethylene, said flame-retarding agent consisting of 5-20 wt.% of Al(OH)$_3$, 0-5 wt.% of magnesium silicate, 40-80 wt.% of Mg(OH)$_2$, 5-10 wt.% of Sb$_2$O$_3$, and 0-10 wt.% of chlorinated paraffin, wherein the content of said flame-retarding agent is in the range of 0.55-1 wt.% based on 1 part by weight of said resin component, and further containing conventional additives.

2. The flame-retardant foam composition according to claim 1, wherein the conventional additives include 0-50 wt.% of plasticizer, 0-15 wt.% of stabilizer, 0-2.5 wt.% of vulcanizing agent, 0-1 wt.% of each of 2-mercapto benzothiazol(M), dibenzothiadyl disulfide(DM) and Zn-dimethyl dithiocarbamate(PZ) as vulcanization promoters, 10-40 wt.% of foaming agent, 0-2 wt.% of auxiliary (foaming) agent, 0-5 wt.% of heat transfer 0-2.5 wt.% of external morphological modifier, 0-4 wt.% of internal morphological modifier, 0-10 wt.% of filler.

3. The flame-rctardant foam composition according to claim 1, wherein said resin component comprises two or four components selected from the group consisting of nitrile rubber, polyvinyl chloride, chlorinated polyethylene and polyethylene.

4. The flame-retardant foam composition according to claim 1, wherein said nitrile rubber has the acrylonitrile content of 28-34%.

5. The flame-retardant foam composition according to claim 1, wherein said chlorinated polyethylene has chlorine content of 36-42%.

6. A process for preparing flame-retardant foam composition comprising nitrile rubber and polyvinyl chloride as resin components and including flame-retarding agent, plasticizer and stabilizer as additives, and said resin components consisting of 10-50 wt.% of nitrile rubber, 30-50 wt.% of polyvinyl chloride, and 20-40 wt.% of chlorinated polyethylene or polyethylene, said flame-retarding agent consisting of 5-20 wt.% of Al(OH)$_3$, 0-5 wt.% of magnesium silicate, 40-80 wt.% of Mg(OH)$_2$, 5-10 wt.% of Sb$_2$O$_3$, and 0-10 wt.% of chlorinated paraffin, wherein the content of said flame-retarding agent is in the range of 0.55-1 wt.% based on 1 part by weight of said resin component, and the process comprising the steps of:

   admixing 0.50 wt.% of plasticizer, 0-15 wt.% of stabilizer and 10-40 wt.% of foaming agent at 114-120°C, and adding 0-2.5 wt.% of vulcanizing agent and 0-1 wt.% of each of-mercapto benzothiazol(M), dibcnzothiadyl disulfide(DM) and Zn-dimethyl dithiocarbamate(PZ) as vulcanization promoters into said mixture, followed by extruding and/or injecting the resultant material to produce foam composition.

FIG 1

시료1

시료2

시료3

시료4

**FIG 2**

시료5

시료6

시료7

FIG 3

시료8

시료9

시료10

FIG 4

시료11

시료12

시료13

FIG 5

시료14  시료15

FIG 6a

A  B

FIG 6b

A                                    B

**European Patent Office**

**EUROPEAN SEARCH REPORT**

Application Number

EP 00 12 2144

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 5 187 203 A (LENOX RONALD S ET AL) 16 February 1993 (1993-02-16) * claims 1,8 * | 1-6 | C08L27/06 C08L23/28 C08L23/04 C08L9/02 |
| D,A | US 4 245 055 A (SMITH WAYNE E) 13 January 1981 (1981-01-13) * example 1 * | 1-6 | |
| A | US 3 163 683 A (SALYER IVAL O ET AL) 29 December 1964 (1964-12-29) * claim 1 * | 1-6 | |

TECHNICAL FIELDS
SEARCHED (Int.Cl.7)

C08L
C08J

The present search report has been drawn up for all claims

| Place of search | Date of completion of the search | Examiner |
|---|---|---|
| THE HAGUE | 21 February 2001 | Rodriguez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**                      EP 00 12 2144

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2001

| Patent document cited in search report | | Publication date | Patent family member(s) | Publication date |
|---|---|---|---|---|
| US 5187203 | A | 16-02-1993 | NONE | |
| US 4245055 | A | 13-01-1981 | NONE | |
| US 3163683 | A | 29-12-1964 | NONE | |

EPO FORM P0459

For more details about this annex : see Official Journal of the European Patent Office, No. 12/82